# EUROPÄISCHE PATENTSCHRIFT

(11) **EP 2 838 403 B1**
(45) Veröffentlichungstag und Bekanntmachung des Hinweises auf die Patenterteilung: **13.06.2018**
(21) Anmeldenummer: 13717233.4
(22) Anmeldetag: 09.04.2013
(51) Int. Cl.: A47J 19/02, B65D 47/28

(54) **KÜCHENMASCHINE MIT EINEM FLÜSSIGKEITSAUSLASS**
KITCHEN MACHINE WITH AN OUTLET FOR LIQUIDS
MACHINE DE CUISINE DOTÉE D'UNE ÉVACUATION DE LIQUIDE

(30) Priorität: 16.04.2012 DE 102012206163
(43) Veröffentlichungstag der Anmeldung: 25.02.2015
(73) Patentinhaber: BSH Hausgeräte GmbH, 81739 München (DE)
(72) Erfinder: CATER, Matej, 3301 Petrovce (SI); JEGRISNIK, Uros, 3313 Polzela (SI); MAZEJ, Stanislav, 3303 Gomilsko (SI)
(86) Internationale Anmeldenummer: PCT/EP2013/057370
(87) Internationale Veröffentlichungsnummer: WO 2013/156344

(56) Entgegenhaltungen:
- WO-A1-2010/128274
- US-A- 2 913 152
- US-A1- 2011 083 565

## Beschreibung

### Gebiet der Erfindung

Die Erfindung betrifft eine Küchenmaschine mit einem Flüssigkeitsauslass, umfassend ein Leitungselement, das an einem Bauteil der Küchenmaschine angeordnet ist, ein Hülsenelement, das bezüglich des Leitungselements zwischen einer Flussstellung und einer Stoppstellung hin und her bewegbar ist, sowie jeweils eine Auslassöffnung am Leitungselement und am Hülsenelement und ein Verfahren zum Bedienen eines Flüssigkeitsauslasses an einer Küchenmaschine.

### Hintergrund der Erfindung

Aus WO 2010/128274 A1 ist eine Küchenmaschine bekannt, die einen röhrenförmigen Auslass umfasst, der einen inneren Bereich hat, der an der Küchenmaschine befestigt ist, sowie einen äußeren Bereich der rotiert werden kann relativ zum inneren Bereich und um die Längsachse des röhrenförmigen Auslasses. Durch Rotation des äußeren Bereiches relativ zum inneren Bereich wird eine Wand gedreht, so dass ein Spalt entsteht, durch welchen Saft ausgelassen werden kann.

Die Offenlegungsschrift DE 101 42 506 A1 offenbart eine Fruchtpresse mit einer schwenkbaren Auffangschale, die ein einfaches und verlustfreies Ausschütten des Fruchtsafts ermöglicht. Um die Auffangschale zu verschwenken, sind an der Außenseite ihrer Mantelwand zwei zueinander gegenüberliegende Vorsprünge vorgesehen, die in Aufnahmen an der Innenseite der Gehäusewand drehbeweglich liegen.

WO 2009/010897 zeigt einen Entsafter mit einem drehbar gehaltenen, gekrümmten Rohr, das durch eine Drehung um ungefähr 180° von einer Tropfposition in eine Tropfstoppposition gedreht werden kann, um das Tropfen von Saft zu verhindern. Gemäß US 2011/083565 A1 weist ein Lebensmittelverarbeitungsgerät zur Saftgewinnung, das ein Reservoir zum Aufnehmen flüssiger Komponenten umfasst, einen verschließbaren Auslass auf. Dabei kann ein Schieber vor einer ersten Auslassöffnung, die dem Gerätekörper zugeordnet ist, nach oben und unten verschoben werden, wobei in der unteren Stellung des Schiebers die erste Auslassöffnung mit einer zweiten Auslassöffnung, die dem Schieber zugeordnet ist, in Deckung gebracht und dadurch ein Durchfluss von Flüssigkeit durch den Auslass ermöglicht wird.

Die gattungsfremde Patentschrift US 2,913,152 beschreibt eine selbstschließende Verschlusskappe für zusammenfaltbare Behälter, etwa für eine Zahnpastatube. Die Verschlusskappe umfasst ein erstes, hohlzylindrisches Element und ein auf diesem teleskopierend bewegliches zweites Element, wobei das erste und das zweite Element jeweils eine Austrittsöffnung aufweisen. Bei Ausüben eines Drucks auf die Tube tritt etwas von dem Inhalt der Tube durch die in Deckung miteinander liegenden Öffnungen aus, wobei durch den Druck des Inhalts das zweite Element aufwärts bewegt wird, so dass der Wandbereich des zweiten Elements unterhalb der Öffnung die Öffnung des ersten Elements verschließt. Um eine größere Menge des Inhalts austreten zu lassen, kann das zweite Element mit einem Finger heruntergedrückt werden.

### Der Erfindung zugrundeliegende Aufgabe

Der Erfindung liegt die Aufgabe zugrunde, eine Küchenmaschine mit einem Flüssigkeitsauslass zu schaffen, die gegenüber dem Stand der Technik verbessert ist, und neue Verfahren bereitzustellen, eine solche Küchenmaschine zu bedienen.

### Erfindungsgemäße Lösung

Die Bezugszeichen in sämtlichen Ansprüchen haben keine einschränkende Wirkung, sondern sollen lediglich deren Lesbarkeit verbessern.

Die der Erfindung zugrundeliegende Aufgabe wird erfindungsgemäß gelöst durch eine Küchenmaschine nach Anspruch 1 und ein Verfahren nach Anspruch 14. Eine Flussstellung im Sinne der Erfindung ist jene Stellung des Hülsenelements, bei der die Auslassöffnung am Hülsenelement und die Auslassöffnung am Leitungselement derart übereinander liegen, dass Flüssigkeit durch diese Öffnungen aus der Küchenmaschine abfließen kann. Eine Stoppstellung im Sinne der Erfindung ist die Position, bei der die Auslassöffnung des Hülsenelements und die Auslassöffnung des Leitungselements so zueinander positioniert sind, dass ein Abfluss von Flüssigkeit aus der Küchenmaschine nicht möglich ist.

Eine Translationsbewegung im Sinne der Erfindung ist eine Bewegung, bei der sich der Schwerpunkt des Hülsenelements geradlinig bezüglich eines beliebig orientierten dreidimensionalen kartesischen Koordinatenbezugssystems bewegt. Damit ist klar, dass auch eine geradlinige Bewegung des Schwerpunktes des Hülsenelements erfindungsgemäß ist, bei der das Hülsenelement zusätzlich gleichzeitig um seinen Schwerpunkt rotiert.

Durch den Einsatz einer Translationsbewegung zur Überführung des Hülsenelements von der Stoppstellung in die Flussstellung und von der Flussstellung in die Stoppstellung kann eine besonders einfache und zuverlässige Lösung für einen Flüssigkeitsauslass an einer Küchenmaschine geschaffen werden. Der Flüssigkeitsauslass kann für den Benutzer leichter zu handhaben und für den Hersteller einfach zu produzieren sein.

Ein anderer Aspekt der Erfindung ist entsprechend ein neuartiges Verfahren zum Bedienen eines Flüssigkeitsauslasses einer Küchenmaschine. Das Verfahren umfasst das Greifen des Hülsenelements des Flüssigkeitsauslasses, das Translatieren des Hülsenelements hinsichtlich des Leitungselementes des Flüssigkeitsauslasses in die Flussstellung, daraufhin das Abwarten des Abflusses der gewünschten Flüssigkeitsmenge und schließlich das Translatieren des Hülsenelements des Leitungselements in die Stoppstellung. Dieses Verfahren ermöglicht, eine Küchenmaschine mit einem Flüssigkeitsauslass besonders einfach bedienen zu können.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche. Erfindungsgemäß erfolgt die Translationsbewegung zwischen den beiden Elementen parallel zu einer Längsachse der Elemente. Erfindungsgemäß umgibt nämlich das Hülsenelement das Leitungselement koaxial, bevorzugt koaxial hinsichtlich einer Längsachse des Leitungselements, was für diese Ausführungsform besonders vorteilhaft sein kann. Ein erreichbarer Vorteil dieser Ausführungsform kann sich darin ergeben, dass diese Art der Translation für den Benutzer besonders einfach und intuitiv sein kann, so dass die Bedienung der Küchenmaschine vereinfacht werden kann.

In einer bevorzugten Ausführungsform sind das Leitungselement und das Hülsenelement im Wesentlichen rohrförmig-rundzylindrisch geformt, besonders vorzugsweise kreiszylindrisch. Dies kann den Vorteil haben, dass Flüssigkeit sich nicht in Ecken des Leitungselements oder des Hülsenelements absetzen kann, so dass die Sauberkeit der Küchenmaschine verbessert werden kann. Der Benutzer kann somit weniger Mühe beim Reinigen der Küchenmaschine haben und ein so geformtes Element kann besonders einfach herzustellen sein. Alternativ zur rohrförmig-rundzylindrischen Formung der beiden Elemente können diese auch beispielsweise rechteckig, quadratisch oder auch elliptisch oder vieleckig im Querschnitt entlang einer Längsachse geformt sein, zum Beispiel fünf-oder sechseckig. Auch ein dreieckiges Hülsenelement und ein dreieckiges Leitungselement sind bevorzugt möglich. Vorteil einer solchen eckigen Ausführung kann sein, dass die Elemente besser greifbar sind.

In einer bevorzugten Ausführungsform weist das Leitungselement einen Führungsspalt für einen Vorsprung am Hülsenelement auf. Ein erreichbarer Vorteil ist, dass die Translationsbewegung durch diesen Führungsspalt und den korrespondierenden Vorsprung besser geführt werden kann. Ein versehentliches Verdrehen des Hülsenelementes gegenüber des Leitungselementes, was den Abfluss von Flüssigkeit be-oder verhindern könnte, kann somit verhindert werden. Bevorzugt ist der Vorsprung ein Führungssteg, es kann aber beispielsweise alternativ ein Führungsdorn oder ein andersartiger Vorsprung am Hülsenelement vorhanden sein, der in dem Führungsspalt des Leitungselements translatierbar ist. Auch kann der Führungsspalt in einer alternativen Ausführungsform am Hülsenelement angeordnet sein und der Vorsprung am Leitungselement. Diese Ausführungsform kann genau die gleichen Vorteile mit sich bringen, wie die oben beschriebene.

In einer besonders bevorzugten Ausführungsform verläuft der Führungsspalt abschnittsweise parallel zur Längsachse des Leitungselements. Diese Ausführungsform ist besonders dann vorteilhaft, wenn die Translationsbewegung zwischen den beiden Elementen koaxial zu deren Längsachse erfolgt. Dann kann der Führungsspalt eine zuverlässige Translationsbewegung koaxial zur Längsachse bewirken.

In einer nochmals besonders bevorzugten Ausführungsform verläuft der Führungsspalt abschnittsweise mindestens in einer Richtungskomponente parallel zur Umfangslinie des Leitungselements. Dadurch kann vorteilhafterweise verhindert werden, dass das Hülsenelement bei der Translationsbewegung parallel zur Längsachse des Leitungselements versehentlich vollständig vom Leitungselement entfernt wird und dadurch Flüssigkeit unkontrolliert aus dem Leitungselement abfließt. Verläuft der Führungsspalt abschnittsweise mindestens mit einer Richtungskomponente parallel zur Umfangslinie des Leitungselements, kann außerdem vorteilhaft erreicht werden, dass durch eine Rotationsbewegung des Hülsenelements um die Längsachse des Leitungselements und eine daran anschließende erneute Translationsbewegung entlang der Längsachse das Hülsenelement vom Leitungselement gelöst werden kann, um die beiden Elemente zu reinigen, ein versehentliches Lösen jedoch erschwert wird. Somit wäre also bevorzugt, einen Abschnitt des Führungsspalts parallel zur Längsachse des Leitungselements verlaufen zu lassen, dann einen Abschnitt anzuschließen, der mit mindestens einer Richtungskomponente parallel zur Umfangslinie des Leitungselements verläuft, und dann den Führungsspalt wieder parallel zur Längsachse des Leitungselements verlaufen zu lassen. Das Ende dieses letzten Abschnittes liegt dann vorzugsweise am der Küchenmaschine entfernten Ende des Leitungselements. Alternativ kann der Führungsspalt auch auf seiner gesamten Länge oder abschnittsweise schraubenförmig ausgeführt sein, so dass das Hülsenelement gegenüber dem Leitungselement durch eine Schraubbewegung bewegbar ist. Diese weist gleichfalls eine Translationsbewegungskomponente auf. Dadurch kann der Vorteil erreicht werden, dass das Hülsenelement und das Leitungselement besser abgedichtet sind.

In einer bevorzugten Ausführungsform ist die Auslassöffnung des Hülsenelements an der Umfangslinie des Hülsenelements angeordnet. Dadurch kann der Vorteil entstehen, dass die Flüssigkeit aus der Küchenmaschine optimal durch die Wirkung der Schwerkraft beschleunigt wird, wodurch der Entleerungsvorgang der Küchenmaschine schneller erfolgen kann.

In einer bevorzugten Ausführungsform ist die Auslassöffnung des Leitungselements an der Umfangslinie des Leitungselements angeordnet und endet bündig an einer Stirnoberfläche des Leitungselements. Das kann den Vorteil mit sich bringen, dass sich zwischen Auslassöffnung und Stirnoberfläche keine Flüssigkeit mehr sammeln kann, was hinsichtlich hygienischer Gesichtspunkte von Vorteil sein kann.

In einer bevorzugten Ausführungsform verläuft die Flächennormale der Hülsenelementauslassöffnung winkelig gegenüber einer Fläche, die von der Umfangslinie des Hülsenelements aufgespannt wird. Dadurch kann der Vorteil erreicht werden, dass das Hülsenelement im Betriebszustand der Küchenmaschine gegenüber der Küchenmaschine nach unten geneigt sein kann, um den Abfluss von Flüssigkeit zu beschleunigen, und unabhängig davon die Hülsenelementauslassöffnung so gestaltet werden kann, dass diese wiederum einen optimalen Abfluss der Flüssigkeit aus dem Flüssigkeitsauslass gewährleisten kann. In einer bevorzugten Ausführungsform ist der Winkel zwischen der Flächennormalen der Hülsenelementauslassöffnung und der von der Umfangslinie aufgespannten Fläche größer als 90 °, besonders bevorzugt größer als 95 ° nochmals bevorzugt größer als 100° nochmals besonders bevorzugt größer als 120° nochmals besonders bevorzugt größer als 140 ° nochmals besonders bevorzugt größer als 160°und nochmals besonders bevorzugt kleiner als 180°.

In einer besonders bevorzugten Ausführungsform ist die Flächennormale der Hülsenelementauslassöffnung in der Betriebsposition der Küchenmaschine lotrecht. Dadurch kann vorteilhaft erreicht werden, dass die Flüssigkeit aus der Küchenmaschine beim Abfließen aus dem Flüssigkeitsauslass durch die Schwerkraft optimal beschleunigt wird, was zu einer besonders vorteilhaft zügigen Flüssigkeitsentleerung der Küchenmaschine führen kann. Selbstverständlich kann die Flächennormale der Hülsenelementauslassöffnung in der Betriebsposition der Küchenmaschine aber auch winkelig zum Lot verlaufen. Dies kann beispielsweise dann vorteilhaft sein, wenn der Flüssigkeitsfluss nicht lotrecht, sondern auf einer gekrümmten Bahn verlaufen soll.

In einer bevorzugten Ausführungsform ist eine Hülsenelementstirnoberfläche vollständig geschlossen. Das kann den Vorteil mit sich bringen, dass in der Stoppstellung des Hülsenelements der Flüssigkeitsauslass der Küchenmaschine nach außen hin völlig abgeschlossen ist. So können beispielsweise in der Stoppstellung keine Insekten in den Flüssigkeitsauslass eindringen, was für den Benutzer von Vorteil sein kann.

In einer bevorzugten Ausführungsform weist das Hülsenelement eine Handhabe auf. Dies kann für den Benutzer von Vorteil sein, weil so die Bedienung des Flüssigkeitsauslasses vereinfacht werden kann. Zudem kann die Wahrscheinlichkeit verringert werden, dass der Benutzer bei einem verschieben des Hülsenelements mit dessen Auslassöffnung in Kontakt kommt und sich an ausströmender Flüssigkeit verschmutzt, verbrüht oder diese kontaminiert.

In einer bevorzugten Ausführungsform ist ein Dichtungselement zwischen Leitungselement und Hülsenelement angeordnet. Das kann den Vorteil mit sich bringen, dass Flüssigkeit die durch die Auslassöffnung am Leitungselement und anschließend durch die Auslassöffnung am Hülsenelement aus dem Flüssigkeitsauslass austritt, nicht zwischen die beiden Elemente geraten kann. Somit kann vorteilhaft verhindert werden, dass sich Flüssigkeit zwischen den Elementen festsetzt, dort eintrocknet und die Translationsbewegung des Hülsenelements erschwert oder behindert. Ein geeignetes Dichtungselement kann beispielsweise ein O-Ring sein. Ein anderes geeignetes Dichtungselement kann eine Labyrinthdichtung sein. Diese kann auch einstückig mit dem Hülsenelement oder dem Leitungselement ausgeführt sein. In einer besonders bevorzugten Ausführungsform ist das Dichtungselement koaxial um das Leitungselement angeordnet. Alternativ kann das Dichtungselement auch koaxial an der Innenseite des Hülsenelements angeordnet sein. Um ein Verrutschen des Dichtungselements zu verhindern, können geeignete Maßnahmen am Leitungselement oder am Hülsenelement angeordnet sein. Dies können beispielsweise Einkerbungen oder Auswölbungen sein.

In einer bevorzugten Ausführungsform ist die Küchenmaschine eine Küchenmaschine zur Nahrungsmittelbearbeitung. Solche Küchenmaschinen können Standküchenmaschinen sein, wie beispielsweise Multifunktionsgeräte, Entsafter, Püriermaschinen, Fruchtpressen oder vergleichbare Geräte. Solche Küchenmaschinen zur Nahrungsmittelbearbeitung umfassen für gewöhnlich einen Motor oder auch einen Handantrieb, Werkzeuge zur Nahrungsmittelbearbeitung, einen Nahrungsmittelbehälter oder auch eine abnehmbare Schüssel für zu bearbeitende Nahrungsmittel. Vorteilhaft kann sich dies auswirken, weil gerade solche Küchenmaschinen von einem wie oben beschriebenen Flüssigkeitsauslass profitieren können. Entsprechend wäre in solchen Fällen die Flüssigkeit die aus dem Flüssigkeitsauslass abfließen würde, beispielsweise ein Frucht- oder Gemüsesaft. Alternativ kann die Küchenmaschine auch eine andere Küchenmaschine sein, beispielsweise ein Schokoladenbrunnen, eine Fritteuse, eine Honigschleuder, eine Kaffeemaschine, ein Teekocher oder auch jedes andere Gerät, was in einer Küche zum Einsatz kommen kann und einen Flüssigkeitsauslass wie oben beschrieben umfasst.

### Kurzbeschreibung der Zeichnungen

Weitere vorteilhafte Ausgestaltungen der Erfindung werden nachfolgend anhand von in den Zeichnungen dargestellten Ausführungsbeispielen, auf welche die Erfindung jedoch nicht beschränkt ist, näher beschrieben.

### Es zeigen schematisch:

- Figur 1: einen Querschnitt durch einen Flüssigkeitsauslass einer erfindungsgemäßen Küchenmaschine, bei der sich das Hülsenelement in Stoppstellung befindet;
- Figur 2: einen Querschnitt durch einen Flüssigkeitsauslass einer erfindungsgemäßen Küchenmaschine, bei dem sich das Hülsenelement in Flussstellung befindet;
- Figur 3: eine perspektivische Ansicht eines Flüssigkeitsauslasses einer erfindungsgemäßen Küchenmaschine, wobei der Flüssigkeitsauslass zerlegt ist und die beiden Elemente Leitungselement und Hülsenelement getrennt perspektivisch gezeigt sind;
- Figur 4: eine Frontansicht eines anderen Ausführungsbeispiels eines Flüssigkeitsauslasses einer erfindungsgemäßen Küchenmaschine;
- Figur 5: einen Querschnitt durch diese andere Ausführungsform, wobei sich das Hülsenelement in Stoppstellung befindet;
- Figur 6: einen Querschnitt durch diese andere Ausführungsform, wobei sich das Hülsenelement in Flussstellung befindet;
- Figur 7: eine perspektivische Ansicht eines zerlegten Flüssigkeitsauslasses dieser alternativen Ausführungform.

### Detaillierte Beschreibung von Ausführungen der Erfindung

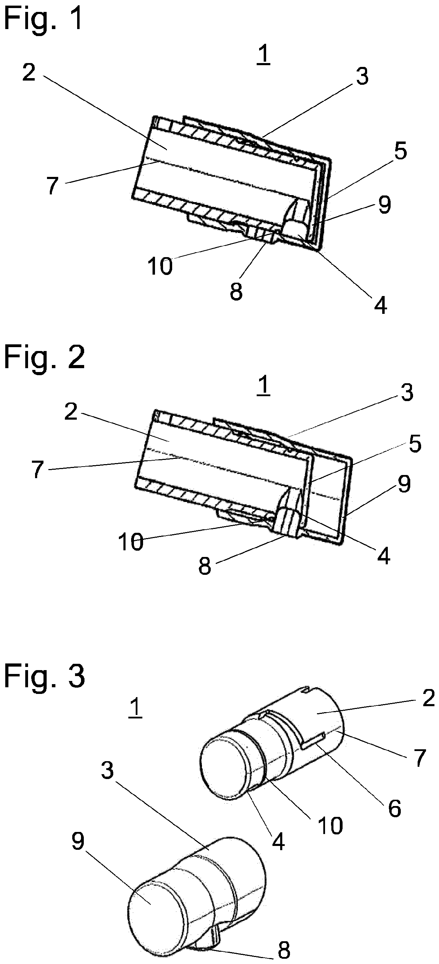

Die Figuren 1 bis 3 zeigen eine mögliche Ausführungsform der Erfindung. In Figur 1 ist ein Flüssigkeitsauslass (1) einer erfindungsgemäßen Küchenmaschine zu sehen, der ein Leitungselement (2) und ein Hülsenelement (3) umfasst. Das Leitungselement (2) ist im Wesentlichen kreiszylindrisch geformt. Das Leitungselement (2) weist eine Leitungselementauslassöffnung (4) auf. Diese Leitungselementauslassöffnung (4) ist in dieser Ausführungsform an der Umfangslinie des Leitungselements (2) angeordnet und endet bündig an einer Leitungselementstirnoberfläche (5) des Leitungselements (2). In Figur 3 ist auf dem Leitungselement (2) ein Führungsspalt (6) zu erkennen, der abschnittsweise parallel zu einer Längsachse (7) des Leitungselements (2) verläuft und abschnittsweise mindestens mit einer Richtungskomponente parallel zur Umfangslinie des Leitungselements (2) verläuft.

Das Hülsenelement (3) ist wie das Leitungselement (2) im Wesentlichen kreiszylindrisch geformt. Es umgibt das Leitungselement (2) koaxial. Eine Hülsenelementauslassöffnung (8) ist an der Umfangslinie des Hülsenelements angeordnet. Eine Hülsenelementstirnoberfläche (9) des Hülsenelements (3) ist vollständig geschlossen. Somit kann durch die Hülsenelementstirnoberfläche (9) nicht nur keine Flüssigkeit aus dem Flüssigkeitsauslass (1) austreten, sondern es können auch von außen keine Schmutzpartikel oder Insekten durch die Hülsenelementstirnoberfläche (9) in den Flüssigkeitsauslass (1) eindringen und so die Flüssigkeit im Innern der Küchenmaschine verunreinigen.

Durch eine Translationsbewegung parallel zur gemeinsamen Längsachse (7) ist das Hülsenelement (3) gegenüber dem Leitungselement (2) von einer Stoppstellung in eine Flussstellung und von der Flussstellung in die Stoppstellung bewegbar. In Figur 1 ist der Zustand der Stoppstellung gezeigt, in Figur 2 der Zustand der Flussstellung. In der Stoppstellung sind die Leitungselementauslassöffnung (4) und die Hülsenelementauslassöffnung (8) so zueinander versetzt, dass durch den Flüssigkeitsauslass (1) keine Flüssigkeit aus der Küchenmaschine nach außen fließen kann. In der Flussstellung überlagern sich die Leitungselementauslassöffnung (4) und die Hülsenelementauslassöffnung (8), so dass Flüssigkeit aus dem Inneren der Küchenmaschine aus dem Flüssigkeitsauslass (1), durch die Leitungselementauslassöffnung (4) und anschließend durch die Hülsenelementauslassöffnung (8), austreten kann. Die austretende Flüssigkeit kann dann durch ein Flüssigkeitsbehältnis (nicht dargestellt) aufgefangen werden.

Während der Translation des Hülsenelements (3) gegenüber dem Leitungselement (2) von einer Stellung zur anderen entlang der Längsachse (7) verschiebt sich ein Führungssteg (nicht dargestellt) des Hülsenelements (3) in dem Führungsspalt (6) des Leitungselements (2). Der Abschnitt des Führungsspalts (6) der parallel zur Längsachse (7) des Leitungselements (2) verläuft, endet von der Küchenmaschine wegweisend dann, wenn Leitungselementauslassöffnung (4) und die Hülsenelementauslassöffnung (8) übereinander liegen. So ist dem Benutzer unmittelbar klar, wann durch das Translatieren des Hülsenelements (3) die Flussstellung erreicht ist.

Der Führungssteg des Hülsenelements (3) verhindert zudem, dass das Hülsenelement (3) über die Flussstellung hinaus unabsichtlich translatiert werden kann. Am besagten Ende des Abschnitts parallel zur Längsachse (7) des Leitungselements (2) des Führungsspalts (10) beginnt nämlich der Abschnitt des Führungsspalts (10), der mit einer Richtungskomponente parallel zur Umfangslinie des Leitungselements (2) verläuft. In diesem Fall verläuft er spiralförmig. Möchte der Benutzer also das Hülsenelement (3) vom Leitungselement (2) lösen, beispielsweise zum Reinigen, muss er dies absichtlich durch eine spiralförmige Bewegung des Hülsenelements (3) herbeiführen, um am Ende dieses Abschnitts, der parallel zur Umfangslinie des Leitungselements (2) verläuft, das Hülsenelement (3) vom Leitungselement (2) wieder durch eine reine Translation parallel zur Längsachse (7) des Leitungselements (2) entfernen zu können. Durch diesen einfachen Bewegungsablauf können beide Elemente (2, 3) voneinander getrennt werden. Dieser Zustand ist in Figur 3 gezeigt. Vorteilhaft kann dadurch verhindert werden, dass das Hülsenelement (3) versehentlich vom Leitungselement (2) entfernt wird, wodurch es zu einem unkontrollierten Abfluss von Flüssigkeit aus der Leitungselementauslassöffnung (4) kommen kann.

Wie in den Figuren 1 bis 3 zu sehen, befindet sich am Übergang zwischen der Leitungselementauslassöffnung (4) und der Hülsenelementauslassöffnung (8) ein Dichtungselement (10), um zu verhindern, dass in der Stoppstellung Flüssigkeit aus der Leitungselementauslassöffnung (4) zur Hülsenelementauslassöffnung (8) fließen kann oder in der Flussstellung zwischen dem Leitungselement (2) und dem Hülsenelement (3) absetzen kann. Das Dichtungselement (10) ist in diesem Fall ein O-Ring. Er umgibt koaxial das Leitungselement (2) und eine umlaufende Nut auf dem Leitungselement (2) verhindert, dass das sich das Dichtungselement (10) verschiebt.

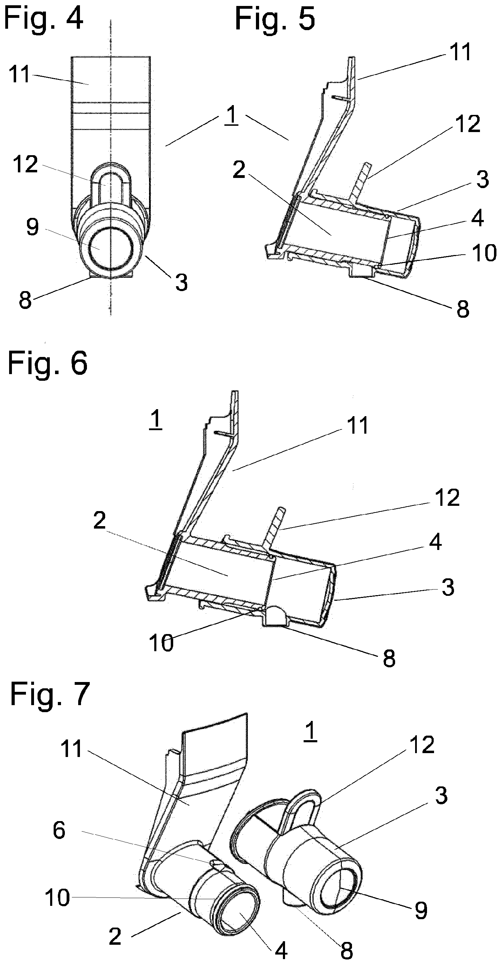

Die Figuren 4, 5, 6 und 7 zeigen eine alternative Ausführungsform des Flüssigkeitsauslasses (1) in einer erfindungsgemäßen Küchenmaschine. Zu sehen ist in diesen Figuren ein Flüssigkeitsauslass (1), dessen Leitungselement (2) an einem Küchenmaschinenbauteil (11), in diesem Fall an einem Gehäuseteil, angeordnet ist. Das Leitungselement (2) ist wiederum im Wesentlichen kreiszylindrisch geformt. In diesem Ausführungsbeispiel befindet sich die Leitungselementauslassöffnung (4) allerdings an der Leitungselementstirnoberfläche (5). Das Leitungselement (2) weist auch in dieser Ausführungsform einen Führungsspalt (6) auf, der in Figur 7 zu sehen ist.

Das Hülsenelement (3) umgibt das Leitungselement (2) wiederum koaxial und ist erneut kreiszylindrisch geformt. Es umfasst zur besseren Bedienbarkeit in diesem Ausführungsbeispiel eine Handhabe (12) an seiner Oberseite. Die Hülsenelementauslassöffnung (8) ist wieder an der Umfangslinie des Hülsenelements (3) angeordnet und die Hülsenelementstirnoberfläche (9) des Hülsenelements (3) ist vollständig geschlossen. Die Hülsenelementauslassöffnung (8) ist, wie in Figur 5 gut zu erkennen ist, in der Betriebsposition der Küchenmaschine lotrecht und die Flächennormale der Hülsenelementauslassöffnung (8) verläuft gegenüber einer Fläche, die von der Umfangslinie des Hülsenelements (3) aufgespannt wird, winkelig. Das Hülsenelement (3) kann ebenso wie im ersten Ausführungsbeispiel vom Leitungselement (2) entfernt werden, beispielsweise um die beiden Elemente (2, 3) zu reinigen oder das Hülsenelement (3) zu ersetzen. Dieser getrennte Zustand dieses Ausführungsbeispiels ist beispielhaft in Figur 7 gezeigt. Das Verfahren zum Trennen entspricht dem vorangehend erläuterten.

Auch in dieser Ausführungsform ist das Hülsenelement (3) durch eine Translationsbewegung entlang der Längsachse gegenüber dem Leitungselement (2) von einer Stoppstellung in eine Flussstellung und von der Flussstellung in die Stoppstellung bewegbar. Figur 5 zeigt einen Querschnitt durch einen Flüssigkeitsauslass (1) einer erfindungsgemäßen Küchenmaschine, bei der sich das Hülsenelement (3) in Stoppstellung befindet und Figur 6 zeigt einen Querschnitt durch einen Flüssigkeitsauslass (1) einer erfindungsgemäßen Küchenmaschine, bei der sich das Hülsenelement (3) nach koaxialer Translation in Flussstellung befindet. In der Stoppstellung sind die Leitungselementauslassöffnung (4) und die Hülsenelementauslassöffnung (8) so zueinander versetzt, dass ein Flüssigkeitsabfluss aus dem Innern der Küchenmaschine (1) unterbunden wird. In der Flussstellung wiederum kann Flüssigkeit aus dem Inneren der Küchenmaschine durch den Flüssigkeitsauslass (1) herausfließen, nämlich zuerst durch die Leitungselementauslassöffnung (4) und anschließend durch die Hülsenelementauslassöffnung (8). Das Herausfließen wird positiv beeinflusst durch die lotrechte Positionierung der Hülsenelementauslassöffnung (8) und ihre winklige Positionierung in Bezug auf die Fläche, die von der Umfangslinie des Hülsenelements (3) aufgespannt wird. Dadurch kann jeweils der Abfluss von Flüssigkeit durch den Flüssigkeitsauslass (1) mit Hilfe der Schwerkraft ohne technische Hilfsmittel beschleunigt werden.

Durch die dargestellten Flüssigkeitsauslasse (1) wird eine verbesserte Flüssigkeitsentnahme aus einer Küchenmaschine ermöglicht.

### Bezugszeichenliste

(1) Flüssigkeitsauslass
(2) Leitungselement
(3) Hülsenelement
(4) Leitungselementauslassöffnung
(5) Leitungselementstirnoberfläche
(6) Führungsspalt
(7) Längsachse
(8) Hülsenelementauslassöffnung
(9) Hülsenelementstirnoberfläche
(10) Dichtungselement
(11) Küchenmaschinenbauteil
(12) Handhabe

## Patentansprüche

1. Küchenmaschine mit einem Flüssigkeitsauslass (1), umfassend ein Leitungselement (2), das an einem Bauteil (11) der Küchenmaschine angeordnet ist, ein Hülsenelement (3), das bezüglich des Leitungselements (2) zwischen einer Flussstellung und einer Stoppstellung hin und her bewegbar ist, sowie jeweils eine Auslassöffnung (4, 8) am Leitungselement (2) und am Hülsenelement (3),
**dadurch gekennzeichnet, dass**
das Hülsenelement (3) das Leitungselement (2) koaxial umgibt und dass das Hülsenelement (3) durch eine Translationsbewegung gegenüber dem Leitungselement (2) von der Stoppstellung in die Flussstellung und von der Flussstellung in die Stoppstellung bewegbar ist, wobei die Translationsbewegung zwischen den beiden Elementen (2, 3) parallel zu einer Längsachse (7) der Elemente erfolgt.

2. Küchenmaschine nach Anspruch 1, **dadurch gekennzeichnet, dass** das Leitungselement (2) und das Hülsenelement (3) im Wesentlichen rohrförmig-rundzylindrisch geformt sind.

3. Küchenmaschine nach einem der vorhergehenden Ansprüche, **dadurch gekennzeichnet, dass** das Leitungselement (2) einen Führungsspalt (6) für einen Vorsprung am Hülsenelement (3) aufweist.

4. Küchenmaschine nach Anspruch 3, **dadurch gekennzeichnet, dass** der Führungsspalt (6) abschnittsweise parallel zur Längsachse des Leitungselements (2) verläuft.

5. Küchenmaschine nach Anspruch 3 oder 4, **dadurch gekennzeichnet, dass** der Führungsspalt (6) abschnittsweise mindestens mit einer Richtungskomponente parallel zur Umfangslinie des Leitungselements (2) verläuft.

6. Küchenmaschine nach einem der vorhergehenden Ansprüche, **dadurch gekennzeichnet, dass** die Auslassöffnung (5) des Hülsenelements (3) an der Umfangslinie des Hülsenelements (3) angeordnet ist.

7. Küchenmaschine nach einem der vorhergehenden Ansprüche, **dadurch gekennzeichnet, dass** die Auslassöffnung (4) des Leitungselements (2) an der Umfangslinie des Leitungselements (2) angeordnet ist und bündig an einer Leitungselementstirnoberfläche (5) endet.

8. Küchenmaschine nach einem der vorhergehenden Ansprüche, **dadurch gekennzeichnet, dass** die Flächennormale der Hülsenelementauslassöffnung (8) winkelig gegenüber einer Fläche, die von der Umfangslinie des Hülsenelements aufgespannt wird, verläuft.

9. Küchenmaschine nach einem der vorhergehenden Ansprüche, **dadurch gekennzeichnet, dass** die Flächennormale der Hülsenelementauslassöffnung (8) in der Betriebsposition der Küchenmaschine lotrecht ist.

10. Küchenmaschine nach einem der vorhergehenden Ansprüche, **dadurch gekennzeichnet, dass** eine Hülsenelementstirnoberfläche (9) vollständig geschlossen ist.

11. Küchenmaschine nach einem der vorhergehenden Ansprüche, **dadurch gekennzeichnet, dass** das Hülsenelement (3) eine Handhabe (12) aufweist.

12. Küchenmaschine nach einem der vorhergehenden Ansprüche, **dadurch gekennzeichnet, dass** ein Dichtungselement (10) zwischen Leitungselement (2) und Hülsenelement (3) angeordnet ist.

13. Küchenmaschine nach einem der vorhergehenden Ansprüche, **dadurch gekennzeichnet, dass** die Küchenmaschine eine Küchenmaschine zur Nahrungsmittelbearbeitung ist.

14. Verfahren zum Bedienen eines Flüssigkeitsauslasses (1) an einer Küchenmaschine gemäß einem der vorhergehenden Ansprüche, umfassend die Schritte:
- Greifen des Hülsenelements (3) des Flüssigkeitsauslasses (1)
- Translatieren des Hülsenelements (3) hinsichtlich des Leitungselements (2) des Flüssigkeitsauslasses (1) in die Flussstellung
- Abwarten des Abflusses der gewünschten Flüssigkeitsmenge
- Translatieren des Hülsenelements (3) hinsichtlich des Leitungselements (2) in die Stoppstellung.

## Claims

1. Kitchen machine with a liquid outlet (1), comprising a line element (2) which is arranged on a part (11) of the kitchen machine, a sleeve element (3) which can be moved back and forth relative to the line element (2) between a flow setting and a stop setting, as well as an outlet opening (4, 8) on both the line element (2) and the sleeve element (3),
**characterised in that**
the sleeve element (3) surrounds the line element (2) coaxially and the sleeve element (3) can be moved by a translatory movement with respect to the line element (2) from the stop setting into the flow setting and from the flow setting into the stop setting, wherein the translatory movement between the two elements (2, 3) takes place parallel to a longitudinal axis (7) of the elements.

2. Kitchen machine according to claim 1, **characterised in that** the line element (2) and the sleeve element (3) are essentially formed in the manner of a tubular, round cylinder.

3. Kitchen machine according to one of the preceding claims, **characterised in that** the line element (2) has a guide slot (6) for a protrusion on the sleeve element (3).

4. Kitchen machine according to claim 3, **characterised in that** the guide slot (6) runs parallel to the longitudinal axis of the line element (2) in sections.

5. Kitchen machine according to claim 3 or 4, **characterised in that** the guide slot (6) runs parallel to the circumferential line of the line element (2) in sections, at least with a directional component.

6. Kitchen machine according to one of the preceding claims, **characterised in that** the outlet opening (5) of the sleeve element (3) is arranged on the circumferential line of the sleeve element (3).

7. Kitchen machine according to one of the preceding claims, **characterised in that** the outlet opening (4) of the line element (2) is arranged on the circumferential line of the line element (2) and ends flush at a line element end surface (5).

8. Kitchen machine according to one of the preceding claims, **characterised in that** the surface normal of the sleeve element outlet opening (8) runs at an angle with respect to a surface with is spanned by the circumferential line of the sleeve element.

9. Kitchen machine according to one of the preceding claims, **characterised in that** the surface normal of the sleeve element outlet opening (8) is vertical in the operating position of the kitchen machine.

10. Kitchen machine according to one of the preceding claims, **characterised in that** a sleeve element end surface (9) is completely closed.

11. Kitchen machine according to one of the preceding claims, **characterised in that** the sleeve element (3) has a handle (12).

12. Kitchen machine according to one of the preceding claims, **characterised in that** a seal element (10) is arranged between the line element (2) and sleeve element (3).

13. Kitchen machine according to one of the preceding claims, **characterised in that** the kitchen machine is a kitchen machine for food preparation.

14. Method for operating a fluid outlet (1) on a kitchen machine according to one of the preceding claims, comprising the steps:
- holding the sleeve element (3) of the liquid outlet (1)
- translating the sleeve element (3) with regard to the line element (2) of the liquid outlet (1) into the flow setting
- waiting for the desired quantity of liquid to drain
- translating the sleeve element (3) with regard to the line element (2) into the stop setting.

## Revendications

1. Appareil de cuisine doté d'une sortie de fluide (1), comprenant un élément de guidage (2), disposé sur un composant (11) de l'appareil de cuisine, un élément formant fourreau (3), déplaçable en va-et-vient par rapport à l'élément de guidage (2) entre une position d'écoulement et une position d'arrêt, ainsi que respectivement un orifice de sortie (4, 8) sur l'élément de guidage (2) et sur l'élément formant fourreau (3), **caractérisé en ce que** l'élément formant fourreau (3) entoure coaxialement l'élément de guidage (2) et **en ce que** l'élément formant fourreau (3) est déplaçable, par un mouvement de translation, par rapport à l'élément de guidage (2) de la position d'arrêt dans la position d'écoulement et de la position d'écoulement dans la position d'arrêt, le mouvement de translation entre les deux éléments (2, 3) s'opérant parallèlement à un axe longitudinal (7) des éléments.

2. Appareil de cuisine selon la revendication 1, **caractérisé en ce que** l'élément de guidage (2) et l'élément formant fourreau (3) sont essentiellement formés de façon tubulaire-cylindrique ronde.

3. Appareil de cuisine selon l'une des revendications précédentes, **caractérisé en ce que** l'élément de guidage (2) présente une fente d'introduction (6) pour une saillie sur l'élément formant fourreau (3).

4. Appareil de cuisine selon la revendication 3, **caractérisé en ce que** la fente d'introduction (6) s'étend par sections parallèlement à l'axe longitudinal de l'élément de guidage (2).

5. Appareil de cuisine selon la revendication 3 ou 4, **caractérisé en ce que** la fente d'introduction (6) s'étend par sections, au moins avec un composant directionnel, parallèlement à la ligne circonférentielle de l'élément de guidage (2).

6. Appareil de cuisine selon l'une des revendications précédentes, **caractérisé en ce que** l'orifice de sortie (5) de l'élément formant fourreau (3) est disposé sur la ligne circonférentielle de l'élément formant fourreau (3).

7. Appareil de cuisine selon l'une des revendications précédentes, **caractérisé en ce que** l'orifice de sortie (4) de l'élément de guidage (2) est disposé sur la ligne circonférentielle de l'élément de guidage (2) et se termine à fleur d'une surface frontale de l'élément de guidage (5).

8. Appareil de cuisine selon l'une des revendications précédentes, **caractérisé en ce que** la normale à la surface de l'orifice de sortie de l'élément formant fourreau (8) s'étend en angle par rapport à une surface, définie par la ligne circonférentielle de l'élément formant fourreau.

9. Appareil de cuisine selon l'une des revendications précédentes, **caractérisé en ce que** la normale à la surface de l'orifice de sortie de l'élément formant fourreau (8) est à la verticale en position de fonctionnement de l'appareil de cuisine.

10. Appareil de cuisine selon l'une des revendications précédentes, **caractérisé en ce qu'**une surface frontale de l'élément formant fourreau (9) est intégralement fermée.

11. Appareil de cuisine selon l'une des revendications précédentes, **caractérisé en ce que** l'élément formant fourreau (3) présente une poignée (12).

12. Appareil de cuisine selon l'une des revendications précédentes, **caractérisé en ce qu'**un élément d'étanchéité (10) est disposé entre l'élément de guidage (2) et l'élément formant fourreau (3).

13. Appareil de cuisine selon l'une des revendications précédentes, **caractérisé en ce que** l'appareil de cuisine est un appareil de cuisine servant à transformer les denrées alimentaires.

14. Procédé d'utilisation d'une sortie de fluide (1) sur un appareil de cuisine selon l'une des revendications précédentes, comprenant les étapes :
- saisie de l'élément formant fourreau (3) de la sortie de fluide (1)
- translation de l'élément formant fourreau (3) par rapport à l'élément de guidage (2) de la sortie de fluide (1) dans la position d'écoulement
- attente de l'écoulement de la quantité de fluide souhaitée
- translation de l'élément formant fourreau (3) par rapport à l'élément de guidage (2) dans la position d'arrêt.
